(19) Europäisches Patentamt
European Patent Office
Office européen des brevets

(11) EP 2 700 285 B1

(12) EUROPEAN PATENT SPECIFICATION

(45) Date of publication and mention
of the grant of the patent:
**30.07.2014 Bulletin 2014/31**

(51) Int Cl.:
***H05B 37/02*** (2006.01)

(21) Application number: **12720009.5**

(22) Date of filing: **13.04.2012**

(86) International application number:
**PCT/IB2012/051821**

(87) International publication number:
**WO 2012/143835 (26.10.2012 Gazette 2012/43)**

(54) **SYSTEM AND METHODS FOR DAYLIGHT-INTEGRATED ILLUMINATION CONTROL**

SYSTEM UND VERFAHREN FÜR TAGESLICHTINTEGRIERTE BELEUCHTUNGSSTEUERUNG

SYSTÈME ET PROCÉDÉS DE COMMANDE D'ÉCLAIREMENT INTÉGRÉ À LA LUMIÈRE DU JOUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.04.2011 US 201161477632 P
07.09.2011 US 201161531644 P**

(43) Date of publication of application:
**26.02.2014 Bulletin 2014/09**

(73) Proprietor: **Koninklijke Philips N.V.
5656 AE Eindhoven (NL)**

(72) Inventors:
• **YANG, Hongming
5656 AE Eindhoven (NL)**
• **PANDHARIPANDE, Ashish Vijay
5656 AE Eindhoven (NL)**
• **PENNING DE VRIES, Hendricus Theodorus Gerardus M
5656 AE Eindhoven (NL)**

(74) Representative: **van Eeuwijk, Alexander Henricus Waltherus
Philips
Intellectual Property & Standards
P.O. Box 220
5600 AE Eindhoven (NL)**

(56) References cited:
**US-A1- 2005 110 416     US-A1- 2008 074 059**

• **ASHISH PANDHARIPANDE ET AL: "Daylight integrated illumination control of LED systems based on enhanced presence sensing", ENERGY AND BUILDINGS, LAUSANNE, CH, vol. 43, no. 4, 14 December 2010 (2010-12-14), pages 944-950, XP028359529, ISSN: 0378-7788, DOI: 10.1016/J.ENBUILD.2010.12.018 [retrieved on 2010-12-24]**

**Description**

FIELD OF THE INVENTION

The present invention relates to a light detector, a lighting system comprising at least one such light detector and at least one luminaire, and a method of controlling a lighting system.

BACKGROUND OF THE INVENTION

Efforts have been made to save energy by controlling the dim level of dimmable luminaries, e.g. dimmable light emitting diode (LED) luminaires, in a room. When a lot of daylight or other external light enters the room there is usually no need for a full power of the luminaries. On the other hand, by turning off the luminaries the illumination level often becomes too low. By properly controlling the dimming levels of the luminaires it is possible to provide a partial illumination, which in combination with the illumination already provided by daylight renders a sufficient total illumination, e.g. in terms of users' needs or lighting norms.

To realize daylight-integrated control of a distributed lighting system, it is necessary to make a disaggregated estimation of the light contributions from both daylight and luminaires at the different target locations of illumination rendering. The target locations may typically be in a workspace plane. These contributions then need to be known at the lighting controllers. Based on this knowledge, the light output of the luminaires can then be adapted so as to achieve the desired illumination level at such target locations.

Different solutions of controlling the dim level, i.e. light output level, of luminaries based on determinations of the illumination at target positions have been proposed. A recent control method has been published in an article entitled "Daylight integrated illumination control of LED systems based on enhanced presence sensing", by Ashish Pandharipande and David Caicedo, Energy and Buildings, No. 43 (2011), pp. 944-950. A number of luminaries and co-arranged sensors are mounted at the ceiling. The luminaries are individually identified by coding of the light that they emit. Initially, the luminaries are turned on at a predetermined dimming level, and a commissioning is performed where the illumination is measured at many target positions, and at the ceiling. On basis of the measurements a mapping table is calculated, where the illumination values at the target positions are mapped to illumination values at the ceiling. During the following normal operation the illumination is repeatedly detected by means of the sensors at the ceiling, and by means of the mapping table corresponding illumination values are determined for a number of target positions. The illumination is divided into a daylight part, and a luminaire part. Then an optimization is mathematically performed for all target positions in common, and, finally, corresponding dimming levels of the luminaries are set. This is a nice method, which does not need any sensors at the second level for the continuous operation, and which provides an optimized setting of a plurality of luminaries in common. However, such mapping is not necessarily unique and may not result in optimum control. The superimposed light that is detected has a DC component that is a result of daylight and artificial lighting and an AC component that is entirely due to artificial lighting. The fluctuation of the light signal, i.e. the AC component, from the luminaires, which is used to estimate the artificial light contribution.is normally much smaller than the DC component. Therefore, with a straight forward signal processing particularly competent, and thus expensive, circuitry is needed in order to avoid destructive phenomena such as quantization noise.

SUMMARY OF THE INVENTION

It is an object of the present invention to provide a light detector and a lighting system control based on the light detector that alleviates the above-mentioned problems of the prior art.

The object is achieved by a light detector according to the present invention as defined in claim 1 and a lighting system according to the present invention as defined in claim 8.

Thus, in accordance with an aspect of the present invention, there is provided a light detector arranged to determine a daylight contribution and an artificial light contribution to a combined illumination level, wherein the artificial light comprises light coding modulation, which light coding modulation identifies individual luminaires emitting the light. The detector comprises:

- a photo-sensor arranged to detect the illumination level at its position, and to output a corresponding illumination signal; and
- a calculator, connected with an output of the photo-sensor for receiving the illumination signal, and arranged to calculate the daylight contribution and the artificial light contribution and output corresponding daylight and artificial light signals.

The calculator comprises an electronic filter arranged to prepare the illumination signal for estimation of the daylight contribution and the artificial light contribution of the illumination signal; a daylight part; and an artificial light part, respectively connected to the electronic filter. The artificial light part comprises an artificial light DC component estimator. The daylight part comprises a total DC component estimator, and a subtractor connected to the total DC component estimator and to the artificial light DC component estimator. The daylight part is arranged to determine the daylight contribution by subtracting an artificial light DC component, estimated by the artificial light DC component estimator, from a total DC component, estimated by the total DC component estimator. The artificial light DC component estimator is arranged to include present luminaire dimming level data and modulation depth data regarding the light coding modulation in a basis of its estimation.

The present calculator provides for a simple, low-cost solution for determining daylight illumination level and illumination contribution from different luminaires simultaneously. The present detector structure having an electronic filter for preparing the illumination signal for the estimations provides for such a simple solution. Furthermore, the separate determination of the DC components from daylight and from artificial light and the subsequent combining of the results provides for an accurate determination of the daylight contribution and the artificial light contribution. Additionally, by using the present dimming levels and modulation depths when estimating the artificial light DC component, the accuracy of the result is enhanced. The disaggregated estimation of artificial light contribution thereby obtained is enabled by the knowledge of dimming levels and modulation depths of the/each luminaire. This knowledge is, however, generally easily achievable.

In accordance with an embodiment of the light detector, the electronic filter comprises a DC suppression filter. This is one way of preparing the illumination signal for the estimations which makes it possible to share some signal processing circuitry, such as for analog to digital conversion, between the daylight part and the artificial light part, without having to use the expensive circuitry mentioned above.

In accordance with an embodiment of the light detector, it further comprises signal processing means connected to an output of the DC suppression filter, which signal processing means are shared by the daylight part and the artificial light part.

In accordance with an embodiment of the light detector, the electronic filter comprises a lowpass filter and a highpass filter, wherein the daylight part is connected with an output of the lowpass filter, and the artificial light part is connected with an output of the highpass filter. In comparison with the above embodiment using a DC suppression filter, the accuracy in the DC estimation is slightly improved.

In accordance with an embodiment of the light detector, the artificial light part comprises a luminaire illumination estimator arranged to estimate an illumination component for each luminaire.

In accordance with an embodiment of the light detector, it further comprises a wireless transmitter arranged to transmit the daylight signal and the artificial light signal. This can be embodied as a simple yet reliable way to communicate the result to the luminaires involved.

In accordance with an embodiment of the light detector, it further comprises a wireless receiver arranged to receive present luminaire dimming level data. It should be noted that the photo sensor arranged to detect the illumination level could be employed as this wireless receiver as well, or a separate receiver of an appropriate kind could be used.

According to another aspect of the present invention there is provided a lighting system comprising at least one detector according to any one of the preceding claims, and at least one dimmable luminaire. This lighting system show the same advantages as mentioned above in relation to the light detector.

In accordance with an embodiment of the lighting system, each luminaire of said at least one luminaire comprises a controller arranged to receive the daylight signal and the artificial light signal from each detector of said at least one detector, and to control the dimming level of the luminaire on basis thereof. Since the light detector generates an illumination component for each luminaire, each luminaire receives an individual value with the artificial light signal from the/each light detector, the controller has information to perform a determination of a proper dimming level on basis thereof according to some model of combining or not combining one or more individual value.

According to another aspect of the present invention, there is provided a method of determining a daylight contribution and an artificial light contribution to a combined illumination level wherein the artificial light comprises light coding modulation, which light coding modulation identifies individual luminaires emitting the light, the method compring:

- detecting an illumination level and generating a corresponding illumination signal;
- receiving dimming level data and modulation depth data related to the luminaires;
- determining, by means of the illumination signal, the dimming level data, and the modulation depth data, a daylight contribution and an artificial light contribution from the individual luminaires to the illumination level and generating corresponding daylight and artificial light signals; and
- transmitting the daylight signal and the artificial light signal individually coded to identify the transmitting detector, said determining a daylight contribution and an artificial light contribution comprising:
- filtering the illumination signal to prepare it for estimation of the daylight contribution and the artificial light contribution; and

- determining a total DC component and an artificial light DC component, and providing the daylight contribution as a difference between the total DC component and the artificial light DC component.

According to another aspect of the present invention, there is provided a method of a controlling the dimming levels of dimmable luminaires of a lighting system comprising a plurality of luminaires and a plurality of detectors, wherein the detectors are arranged at target positions in a workspace plane, comprising:

- emitting light coding modulated light from the luminaires, which light coding modulation identifies individual luminaires emitting the light;
- transmitting individually coded dimming level data and modulation depth data regarding the light coding modulation from the luminaires;

at each detector determining a daylight contribution and an artificial light contribution to a combined illumination level according to the just mentioned aspect, and

at each luminaire:

- detecting daylight signals and artificial light signals from the detectors; and
- determining the dimming level of the luminaire on basis of the daylight and artificial light signals.

According to an embodiment of the method, the determining a daylight contribution and an artificial light contribution comprises:

- filtering the illumination signal to prepare it for estimation of the daylight contribution and the artificial light contribution;
- determining a total DC component and an artificial light DC component, and providing the daylight contribution as a difference between the total DC component and the artificial light DC component.

According to an embodiment of the method, the filtering comprises:

- lowpass filtering of the illumination signal and highpass filtering of the illumination signal;
- providing the result of the lowpass filtering as a basis for the determination of the daylight contribution; and
- providing the result of the highpass filtering as a basis for the determination of the artificial light contribution.

These and other aspects, and advantages of the invention will be apparent from and elucidated with reference to the embodiments described hereinafter.

BRIEF DESCRIPTION OF THE DRAWINGS

The invention will now be described in more detail and with reference to the appended drawings in which:

Fig. 1          is a schematic illustration of an embodiment of a lighting system according to the present invention;
Fig. 2          is a schematic block diagram of an embodiment of a luminaire according to the present invention;
Figs. 3 and 4    are schematic block diagrams of embodiments of a light detector according to the present invention; and
Fig. 5          is a schematic block diagram of a part of the light detector.

DESCRIPTION OF PREFERRED EMBODIMENTS

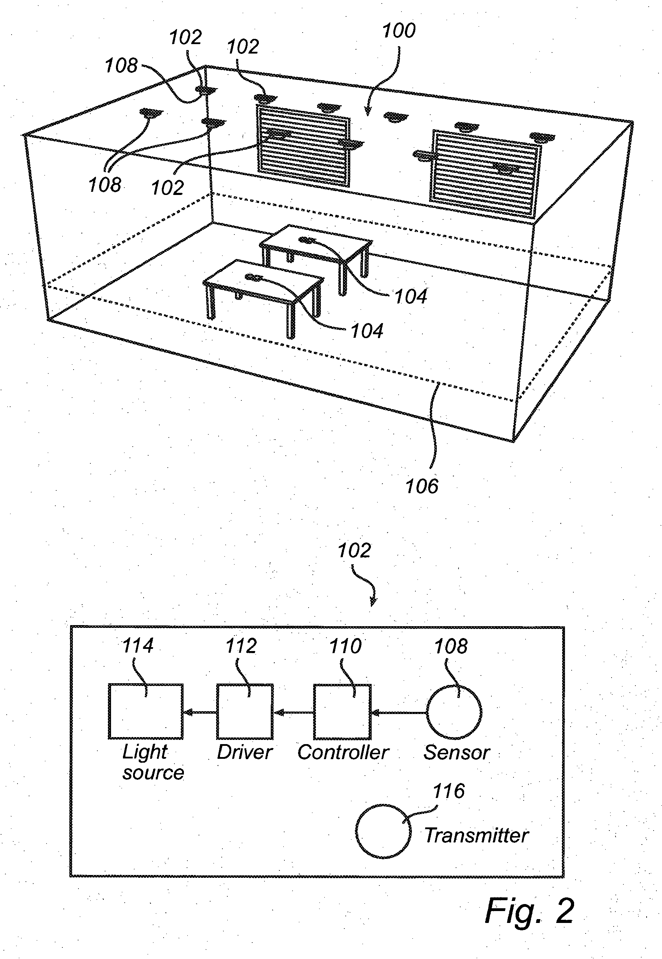

Referring to figs. 1 and , a first embodiment of the lighting system 100 comprises several luminaires 102 arranged at a ceiling of a room, and several light detectors 104 arranged in target positions at a workspace plane 106 of the room. For instance the target positions can be at desks. Each luminaire comprises a sensor 108, a controller 110 connected with the sensor 108, a driver 112 connected with the controller 110, and a light source 114 connected with the driver 112. The controller 110 is arranged to receive signals from the light detectors 104 via the sensor 108, and to control the light source 114 via the driver 112.

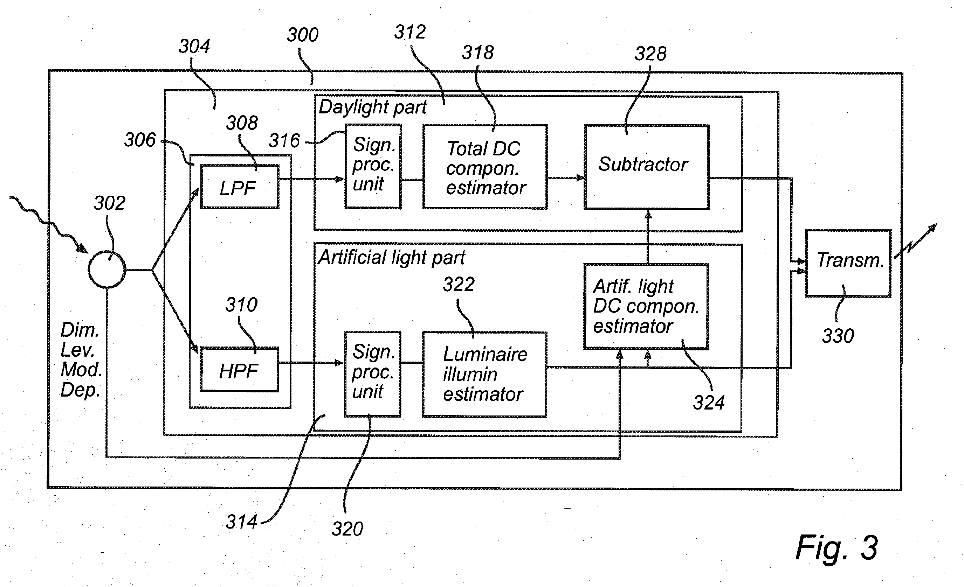

According to a first embodiment of the light detector 300 as shown in Fig. 3 it comprises a photo sensor 302, which is arranged to detect the illumination level at its position, and to output a corresponding illumination signal, and a calculator 304, connected with an output of the photo-sensor 302 for receiving the illumination signal. The calculator 304 comprises an electronic filter 306 arranged to prepare the illumination signal for estimation of the daylight contribution and the artificial light contribution of the illumination signal. The electronic filter comprises a lowpass filter (LPF) 308, and a highpass filter (HPF) 310. The calculator 304 further comprises a daylight part 312, which is connected with the lowpass filter 308 for receiving the DC content of the illumination signal. As known to the person skilled in the art, the expression "DC content" is understood as signals ranging in frequency from zero to a cut-off frequency, which is considered to be low. Here an appropriate cut-off frequency could be chosen between about 10 Hz, and about 100 Hz. The daylight part 312 is arranged to calculate the daylight contribution to the illumination signal, and to output a corresponding daylight signal.

The calculator 304 further comprises an artificial light part 314, which is connected with the highpass filter 310 for receiving the AC content of the illumination signal. The highpass filter 310 typically passes frequencies above the lowpass filter cut-off frequency. A highpass filter cut-off frequency, i.e. the lower limit, could be for instance about 150 Hz. The artificial light part is arranged to calculate the artificial light contribution to the illumination signal, and to output a corresponding artificial light signal.

The daylight part 312 comprises a signal processing unit 316, which is connected to the electronic filter 306, and a total DC component estimator 318. The artificial light part 314 comprises a similar signal processing unit 320 connected to the electronic filter 306, and a luminaire illumination estimator 322, which is arranged to estimate an illumination component for each luminaire, and which generates the artificial light signal. The luminaire illumination estimator 322 comprises an artificial light DC component estimator 324, which is connected to the electronic filter 306 via the luminaire illumination estimator 322, and the signal processing unit 320, and which estimates a DC component of the artificial light. The artificial light DC component estimator 324 is arranged to include present luminaire dimming level data regarding its present dimming level and modulation depth data regarding its present modulation depth of the light coding modulation of the emitted light, in a basis of its estimation. The dimming level data and modulation depth data is received from the luminaires 102 by the photo sensor 302 comprised in the light detector 300, or as an alternative, though more expensive, by a further photo sensor or another kind of wireless receiver, and the dimming level data and modulation depth data is sent by means of a transmitter 116 comprised in each luminaire 102. The communication of the dimming level data and modulation depth data is individually coded like the emitted light from the light source 114.

The DC component output signals are provided to a subtractor 328, which is connected with the total DC component estimator 318 and with the artificial light DC component estimator 324. The subtractor 328 is arranged to determine the daylight contribution by subtracting the artificial light DC component, estimated by the artificial light DC component estimator 324, from the total DC component, estimated by the total DC component estimator 318.

The artificial light DC component and the total DC component are determined as follows. The modulation depth of each luminaire 102 is defined as the ratio of the magnitude of the light output power fluctuation, in the sense of mean to peak value, to the maximum light output power of that luminaire 102. The dimming level of each luminaire 102 is defmed as ratio of the average light output power to the maximum light output power for that luminaire. The ranges of the values for modulation depth and dimming level are thus both between 0 and 1.

From the AC component of the received signal corresponding to each luminaire the signal fluctuation amplitude, denoted by $x_i$ for the $i^{th}$ luminaire, due to each luminaire is estimated. Note that the value of $x_i$ is defined in the sense of mean to peak value.

Then, with the knowledge of the modulation depth, denoted by $a_i$ for the $i^{th}$ luminaire, and dimming level, denoted by $d_i$ for the $i^{th}$ luminaire, the artificial light DC component, denoted $dc_i$, due to the $i^{th}$ luminaire is estimated as $dc_i = (x_i / a_i) * d_i$.

The total DC component can be obtained by simple averaging of the signal reeived at the total DC component estimator 318.

The daylight signal and the artificial light signal are transmitted to the luminaires 102 by means of a wireless transmitter 330, and received by the luminaires 102 by means of their sensors 108. The transmitter 330 is, for instance, realized using a low power LED for the purpose of a low cost solution.

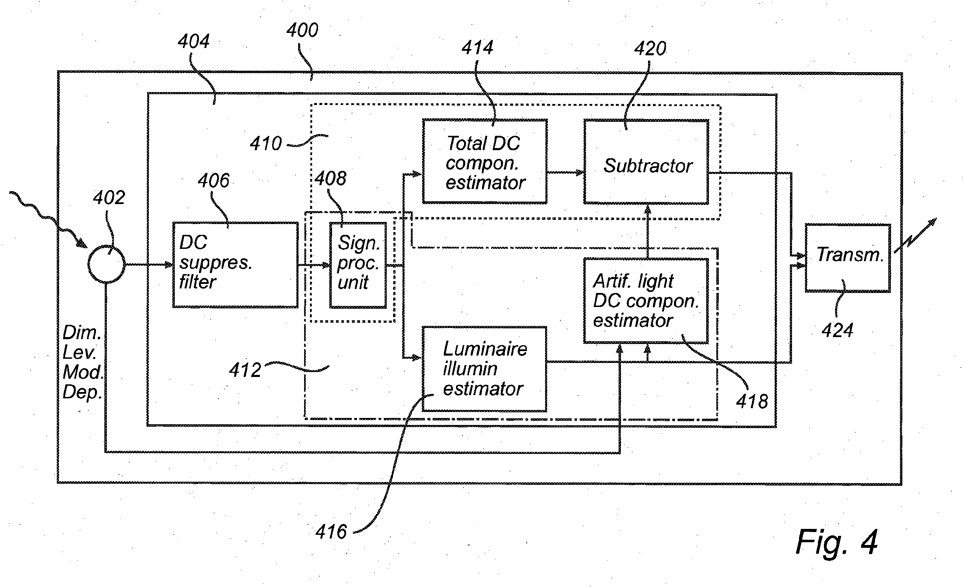

Referring to fig. 4, in a second embodiment of the light detector 400 many parts are similar to those of the above first embodiment 300, and therefore this description will focus on the differences, while the similar parts are merely briefly mentioned. In short, what differs is the electronic filter 406, which is a DC suppression filter, and the signal processing unit 408, which is common to both the daylight part 410 and the artificial light part 412. The single signal processing unit structure makes it a cheaper alternative than the light detector 300 of first embodiment. On the other hand the DC suppression filter causes a slightly less accurate DC estimation. However, the less accurate estimation is still accurate enough to be a true alternative.

Consequently, summarily, the second embodiment of the light detector 400 comprises a photo sensor 402, and a calculator 404. The calculator comprises a DC suppression filter 406 connected with the photo sensor 402, a signal processing unit 408 connected with the DC suppression filter 406, a total DC component estimator 414 connected with the signal processing unit 408, a luminaire illumination estimator 416 connected with the same signal processing unit 408, an artificial light DC component estimator 418 connected with the luminaire illumination estimator 416, and with the photo sensor 402, a subtractor 420 connected with the total DC component estimator 414, and with the artificial light DC component estimator 418, and a transmitter 424 connected with the subtractor 420 and with the luminaire illumination estimator 416. Like in the first embodiment the photo sensor 402 is arranged to detect the illumination level at its position as well as dimming level data and modulation depth data from the luminaires 102.

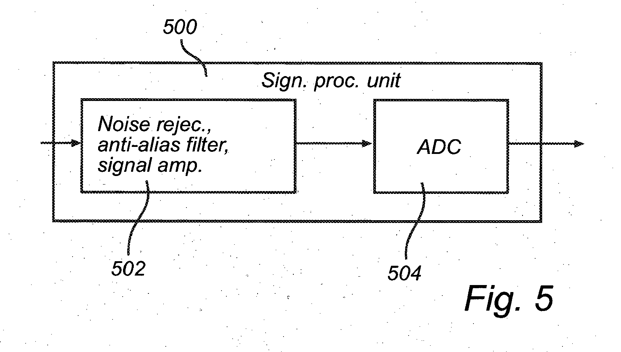

Each one of the signal processing units 500 comprises, see Fig. 5, a first unit comprising noise rejection circuitry, an anti-aliasing filter and a signal amplifier 502, and an analog-to-digital converter 504 connected with the first unit 502.

As regards controlling the lighting system, according to this invention there is provided a method of a controlling the dimming levels of dimmable luminaires of a lighting system comprising a plurality of luminaires and a plurality of detectors, wherein the detectors are arranged at target positions in a workspace plane, comprising:

- emitting light coding modulated light from the luminaires, which light coding modulation identifies individual luminaires emitting the light;
- transmitting individually coded dimming level data and modulation depth data regarding the light coding modulation from the luminaires;

at each detector:

- determining a daylight contribution and an artificial light contribution to a combined illumination level, and

at each luminaire:

- receiving daylight signals and artificial light signals from the detectors; and
- determining the dimming level of the luminaire on basis of the daylight and artificial light signals.

The determination of a daylight contribution and an artificial light contribution to a combined illumination level is performed as follows. It is presumed that the artificial light comprises light coding modulation, which light coding modulation identifies individual luminaires emitting the light. The determination comprises:

- detecting an illumination level and generating a corresponding illumination signal;
- receiving dimming level data and modulation depth data related to the luminaires;
- determining, by means of the illumination signal, the dimming level data, and the modulation depth data, a daylight contribution and an artificial light contribution from the individual luminaires to the illumination level and generating corresponding daylight and artificial light signals; and
- transmitting the daylight signal and the artificial light signal individually coded to identify the transmitting detector,

said determining a daylight contribution and an artificial light contribution comprising:

- filtering the illumination signal to prepare it for estimation of the daylight contribution and the artificial light contribution; and
- determining a total DC component and an artificial light DC component, and providing the daylight contribution as a difference between the total DC component and the artificial light DC component.

In order to coordinate the light outputs, or dimming levels, of all luminaires in the distributed lighting system, there has to be connectivity among the multiple luminaires/controllers and the detectors described above. It is costly in practice to setup an additional communication network, such as radio wireless communication network. Instead, the signals sent from the detectors are individually coded, and decodable at the luminaires, and both light and data sent from the luminaires are individually coded.

It should be noted that all individual coding of emitted light from the light sources and from the transmitters for communicating other data above is preferably invisible. In other words, the modulation of the emitted light is done in a way that is not detected by the human eye as a flickering.

Furthermore, it is advantageous to make the transmitted signals from different light sources orthogonal to each other. By "orthogonal", it can mean that different light sources transmit at different times, as obtained by for instance CSMA-CA (Carrier Sense Multiple Access with Collision Avoidance). However, it can also mean that different light sources transmit at different frequencies, as obtained by FDMA (Frequency Division Multiple Access), or that different light sources employ orthogonal spreading codes such as Walsh-Hadamard code, as obtained by S-CDMA (Synchronous Code Division Multiple Access). However, non-orthogonality is possible as well though more cumbersome to handle.

An embodiment of a method of controlling the dimming levels of the dimmable luminaires 102, typically LED luminaires, according to the present invention operates as follows. The method is employed in the above-described lighting system 100, presuming the communication of the daylight contribution and artificial light contribution signals from the light detectors 300, 400 to the luminaires 102, and the dimming level data and modulation depth data from the luminaires 102 to the light detectors 300, 400. Such a lighting system 100 ensures simple connectivity between light detectors and luminaires/controllers in the lighting system. Further, such a system is easy to commission and simplifies control of the luminaires 102.

With the connectivity among all luminaires and light detectors provided by the embedded identifiers, i.e. the individual coding, it is possible to obtain the knowledge of the individual light contributions of all luminaires and daylight at all target positions. Then, combined with the desired illumination levels at these target positions, it is possible to compute the optimum light level of each luminaire.

Assume there are $N$ luminaires and $M$ light detectors, the light contribution of the $i$th luminaire to the $j$th light detector is $H_{ij}$ when the luminaire is switched on at a full power, the daylight contribution at the $j$th light detector is $H_{0j}$, the target light level at the $j$th light detector is $g_j$, and the dimming level of the $i$th luminaire is $w_i$. Then all $w_i$ should be set such that

$$\sum_j \left| g_j - \left( \sum_i w_i H_{ij} + H_{oj} \right) \right| \leq \epsilon$$

<div align="right">eqn. 1</div>

Further, besides satisfying the desired lighting effects at these light detector locations, it is also desired to minimize the energy consumptions of the lighting system. Clearly, the lighting consumption is related to the dimming levels of the luminaires. Let $E(w_i)$ denote the energy consumption of $i$th luminaire at the dimming level $w_i$. Then, it is also desired to set $w_i$ in order to minimize the sum of $E(w_i)$. Hence, the optimum solution can be computed by

$$\arg \min_{w_1, w_2, \dots w_L} \sum_i E(w_i)$$

<div align="right">eqn. 2</div>

such that

$$\sum_j \left| g_j - \left( \sum_i w_i H_{ij} + H_{oj} \right) \right| \leq \epsilon$$

<div align="right">eqn. 3</div>

where $\epsilon$ is the threshold for acceptable light level results at the target locations.

Then standard optimization algorithms can be employed to compute the optimum dimming levels.

Finally, it should be noted that one of the key advantages of the proposed lighting system and solution is that the lighting control can be enabled with simple commissioning. The only commissioning that is required is to assign unique identifiers to different luminaires and light detectors, which in itself is quite simple. As depicted in Fig. 1, it is just needed to put light detectors at the target region of interest, which can be anywhere in the room, and then automatically estimate the multiple coefficients $H_{ij}$ and $H_{0j}$ and communicate them to all the luminaires/controllers. There is no need to acquire any prior information about the locations and types of the luminaires for this control system to work. An additional advantage of the present solution is that it is possible to obtain the optimum dimming level solution since there is a full knowledge of $H_{ij}$ and $H_{0j}$.

Above embodiments of the light detector, lighting system and control method according to the present invention as defined in the appended claims have been described. These should only be seen as merely non-limiting examples. As understood by the person skilled in the art, many modifications and alternative embodiments are possible within the scope of the invention as defined by the appended claims.

For instance, the signal communication between the light detectors and the luminaires can be realized by means of other kinds of wireless communication means as well as, at least partly, by wired communication means as known to the person skilled in the art. However, wireless light signalling methods are preferred.

It is to be noted that for the purposes of his application, and in particular with regard to the appended claims, the word "comprising" does not exclude other elements or steps, and the word "a" or "an" does not exclude a plurality, which per se will be evident to a person skilled in the art.

**Claims**

1. A light detector (104, 300, 400) arranged to determine a daylight contribution and an artificial light contribution of a combined illumination level wherein the artificial light comprises light coding modulation, which light coding modulation identifies individual luminaires emitting the light, wherein the detector comprises:

   - a photo-sensor (302, 402) arranged to detect the illumination level at its position, and to output a corresponding illumination signal; and
   - a calculator (304, 404), connected with an output of the photo-sensor for receiving the illumination signal, and arranged to calculate a daylight contribution and an artificial light contribution and output corresponding daylight and artificial light signals;

   wherein the calculator comprises:

   - an electronic filter (306, 406) arranged to prepare the illumination signal for estimation of the daylight contribution and the artificial light contribution of the illumination signal;
   - a daylight part (312, 410) connected to the electronic filter; and
   - an artificial light part (314, 412) connected to the electronic filter,

   wherein the artificial light part (314, 412) comprises an artificial light DC component estimator (324, 418),
   wherein the daylight part (312, 410) comprises a total DC component estimator (318, 414); and a subtractor (328, 420) connected to the total DC component estimator (318, 414) and to the artificial light DC component estimator (324, 418), and being arranged to determine the daylight contribution by subtracting an artificial light DC component, estimated by the artificial light DC component estimator (324, 418), from a total DC component, estimated by the total DC component estimator (318, 414), and
   wherein the artificial light DC component estimator (324, 418) is arranged to include present luminaire dimming level data and modulation depth data regarding the light coding modulation in a basis of its estimation.

2. The light detector (400) according to claim 1, wherein the electronic filter comprises a DC suppression filter (406).

3. The light detector (400) according to claim 2, further comprising signal processing means (408) connected to an output of the DC suppression filter (406), which signal processing means are shared by the daylight part (410) and the artificial light part (412).

4. The light detector (300) according to claim 1, wherein the electronic filter comprises a lowpass filter (308) and a highpass filter (310), wherein the daylight part (312) is connected with an output of the lowpass filter (308), and the artificial light part (314) is connected with an output of the highpass filter (310).

5. The light detector (300, 400) according to any one of the preceding claims, wherein the artificial light part (314, 412) comprises a luminaire illumination estimator (322, 416) arranged to estimate an illumination component for each luminaire.

6. The light detector (300, 400) according to any one of the preceding claims, further comprising a wireless transmitter (330, 424) arranged to transmit the daylight signal and the artificial light signal.

7. The light detector (104, 300, 400) according to any one of the preceding claims, further comprising a wireless receiver arranged to receive the present luminaire dimming level data and modulation depth.

8. A lighting system (100) comprising at least one detector (104) according to any one of the preceding claims, and at least one dimmable luminaire (102).

9. The lighting system (100) according to claim 8, wherein each luminaire (102) of said at least one luminaire comprises a controller (110) arranged to receive the daylight signal and the artificial light signal from each detector (104) of said at least one detector, and to control the dimming level of the luminaire (102) on basis thereof.

10. A method of determining a daylight contribution and an artificial light contribution of a combined illumination level wherein the artificial light comprises light coding modulation, which light coding modulation identifies individual luminaires emitting the light, the method comprising:

- detecting an illumination level and generating a corresponding illumination signal;
- receiving dimming level data and modulation depth data related to the luminaires;
- determining, by means of the illumination signal, a daylight contribution and an artificial light contribution from the individual luminaires to the illumination level and generating corresponding daylight and artificial light signals; and
- transmitting the daylight signal and the artificial light signal individually coded to identify the transmitting detector,

said determining a daylight contribution and an artificial light contribution comprising:

- filtering the illumination signal to prepare it for estimation of the daylight contribution and the artificial light contribution; and
- estimating a total DC component and an artificial light DC component, and determining the daylight contribution as a difference between the total DC component and the artificial light DC component, wherein estimating the artificial light DC component includes present luminaire dimming level data and modulation depth data regarding the light coding modulation in a basis of its estimation.

11. A method of a controlling the dimming levels of dimmable luminaires of a lighting system comprising a plurality of luminaires and a plurality of detectors, wherein the detectors are arranged at target positions in a workspace plane, comprising:

- emitting light coding modulated light from the luminaires, which light coding modulation identifies individual luminaires emitting the light;
- transmitting individually coded dimming level data and modulation depth data regarding the light coding modulation from the luminaires;

at each detector determining a daylight contribution and an artificial light contribution of a combined illumination level according to claim 10, and
at each luminaire:

- detecting daylight signals and artificial light signals from the detectors; and
- determining the dimming level of the luminaire on basis of the daylight and artificial light signals.

12. The method according to claim 10 or 11, wherein said filtering comprises:

- lowpass filtering of the illumination signal and highpass filtering of the illumination signal;
- providing the result of the lowpass filtering as a basis for the determination of the daylight contribution; and
- providing the result of the highpass filtering as a basis for the determination of the artificial light contribution.

**Patentansprüche**

1. Lichtdetektor (104, 300, 400), der so eingerichtet ist, dass er einen Tageslichtbeitrag und einen Kunstlichtbeitrag einer kombinierten Beleuchtungsstärke ermittelt, wobei das Kunstlicht eine Lichtcodierungsmodulation, die einzelne, das Licht emittierende Leuchten identifiziert, wobei der Detektor umfasst:

- einen Photosensor (302, 402), der so eingerichtet ist, dass er die Beleuchtungsstärke in seiner Position detektiert und ein entsprechendes Beleuchtungssignal ausgibt; sowie
- einen Kalkulator (304; 404), der mit einem Ausgang des Photosensors zum Empfang des Beleuchtungssignals verbunden und so eingerichtet ist, dass er einen Tageslichtbeitrag sowie einen Kunstlichtbeitrag berechnet und entsprechende Tageslicht- und Kunstlichtsignale ausgibt, wobei der Kalkulator umfasst:

- ein elektronisches Filter (306, 406), das so ausgeführt ist, dass es das Beleuchtungssignal zur Schätzung des Tageslichtbeitrags und des Kunstlichtbeitrags des Beleuchtungssignals aufbereitet;
- einen Tageslichtteil (312, 410), der mit dem elektronischen Filter verbunden ist; sowie
- einen Kunstlichtteil (314, 412), der mit dem elektronischen Filter verbunden ist, wobei der Kunstlichtteil (314, 412) einen Estimator (324, 418) der Kunstlicht-Gleichstromkomponente umfasst,

wobei der Tageslichtteil (312, 410) einen Estimator (318, 414) der Gesamt-Gleichstromkomponente sowie einen Subtrahierer (328, 420) umfasst, der mit dem Estimator (318, 414) der Gesamt-Gleichstromkomponente und dem Estimator (324, 418) der Kunstlicht-Gleichstromkomponente verbunden und so eingerichtet ist, dass er den Tageslichtbeitrag ermittelt, indem er eine von dem Estimator (324, 418) der Kunstlicht-Gleichstromkomponente geschätzte Kunstlicht-Gleichstromkomponente von einer von dem Estimator (318, 414) der Gesamt-Gleichstromkomponente geschätzten Gesamt-Gleichstromkomponente subtrahiert, und wobei der Estimator (324, 418) der Kunstlicht-Gleichstromkomponente so eingerichtet ist, dass er aktuelle Daten bezüglich der Dimmungsstärke der Leuchten sowie die Modulationstiefe betreffende Daten hinsichtlich der Lichtcodierungsmodulation in eine Basis seiner Schätzung aufnimmt.

2. Lichtdetektor (400) nach Anspruch 1, wobei das elektronische Filter ein DC-Sperrfilter (406) umfasst.

3. Lichtdetektor (400) nach Anspruch 2, der weiterhin Signalverarbeitungsmittel (408) umfasst, die mit einem Ausgang des DC-Sperrfilters (406) verbunden sind, wobei die Signalverarbeitungsmittel durch den Tageslichtteil (410) und den Kunstlichtteil (412) geteilt sind.

4. Lichtdetektor (300) nach Anspruch 1, wobei das elektronische Filter ein Tiefpassfilter (308) und ein Hochpassfilter (310) umfasst, wobei der Tageslichtteil (312) mit einem Ausgang des Tiefpassfilters (308) verbunden ist und der Kunstlichtteil (314) mit einem Ausgang des Hochpassfilters (310) verbunden ist.

5. Lichtdetektor (300, 400) nach einem der vorangegangenen Ansprüche, wobei der Kunstlichtteil (314, 412) einen Leuchtenbeleuchtungs-Estimator (322, 416) umfasst, der so eingerichtet ist, dass er eine Beleuchtungskomponente für jede Leuchte schätzt.

6. Lichtdetektor (300, 400) nach einem der vorangegangenen Ansprüche, der weiterhin einen drahtlosen Sender (330, 424) umfasst, der so eingerichtet ist, dass er das Tageslichtsignal und das Kunstlichtsignal überträgt.

7. Lichtdetektor (104, 300, 400) nach einem der vorangegangenen Ansprüche, der weiterhin einen drahtlosen Empfänger umfasst, der so eingerichtet ist, dass er die aktuellen Daten bezüglich der Dimmungsstärke der Leuchten sowie die Daten hinsichtlich der Modulationstiefe empfängt.

8. Beleuchtungssystem (100) mit mindestens einem Detektor (104) nach einem der vorangegangenen Ansprüche sowie mindestens einer dimmbaren Leuchte (102).

9. Beleuchtungssystem (100) nach Anspruch 8, wobei jede Leuchte (102) der mindestens einen Leuchte einen Regler (110) umfasst, der so eingerichtet ist, dass er das Tageslichtsignal und das Kunstlichtsignal von jedem Detektor (104) des mindestens einen Detektors empfängt und die Dimmungsstärke der Leuchte (102) auf der Basis derselben regelt.

10. Verfahren zum Ermitteln eines Tageslichtbeitrags sowie eines Kunstlichtbeitrags einer kombinierten Beleuchtungsstärke, wobei das Kunstlicht eine Lichtcodierungsmodulation umfasst, die einzelne, das Licht emittierende Leuchten identifiziert, wobei das Verfahren die folgenden Schritte umfasst, wonach:

- eine Beleuchtungsstärke detektiert und ein entsprechendes Beleuchtungssignal erzeugt wird;
- auf die Leuchten bezogene Daten hinsichtlich der Dimmungsstärke sowie der Modulationstiefe empfangen werden;
- von den einzelnen Leuchten mit Hilfe des Beleuchtungssignals ein Tageslichtbeitrag und ein Kunstlichtbeitrag zu der Beleuchtungsstärke ermittelt und entsprechende Tageslicht- und Kunstlichtsignale erzeugt werden; und
- das Tageslichtsignal und das Kunstlichtsignal einzeln codiert übertragen werden, um den die Übertragung vornehmenden Detektor zu identifizieren,

wobei das Ermitteln eines Tageslichtbeitrags und eines Kunstlichtbeitrags umfasst:

- das Filtern des Beleuchtungssignals, um dieses zur Schätzung des Tageslichtbeitrags und des Kunstlichtbeitrags aufzubereiten; und
- das Schätzen einer Gesamt-Gleichstromkomponente und einer Kunstlicht-Gleichstromkomponente sowie das Ermitteln des Tageslichtbeitrags als eine Differenz zwischen der Gesamt-Gleichstromkomponente und der Kunstlicht-Gleichstromkomponente, wobei das Schätzen der Kunstlicht-Gleichstromkomponente die Aufnahme aktueller, die Dimmungsstärke der Leuchten sowie die Modulationstiefe betreffende Daten hinsichtlich der Lichtcodierungsmodulation in eine Basis der Schätzung einschließt.

11. Verfahren zur Regelung der Dimmungsstärken dimmbarer Leuchten eines Beleuchtungssystems mit mehreren Leuchten und mehreren Detektoren, wobei die Detektoren in Zielpositionen in einer Arbeitsbereichsebene angeordnet sind, wonach:

- mit Lichtcodierung moduliertes Licht von den Leuchten emittiert wird, wobei die Lichtcodierungsmodulation einzelne, das Licht emittierende Leuchten identifiziert;
- einzeln codierte, die Dimmungsstärke sowie die Modulationstiefe betreffende Daten hinsichtlich der Lichtcodierungsmodulation von den Leuchten übertragen werden;

bei jedem Detektor ein Tageslichtbeitrag und ein Kunstlichtbeitrag einer kombinierten Beleuchtungsstärke nach Anspruch 10 ermittelt werden; und
bei jeder Leuchte:

- Tageslichtsignale und Kunstlichtsignale von den Detektoren detektiert werden; und
- die Dimmungsstärke der Leuchte auf der Basis der Tageslicht- und Kunstlichtsignale ermittelt wird.

12. Verfahren nach Anspruch 10 oder 11, wobei die Filterung umfasst:

- Tiefpassfilterung des Beleuchtungssignals sowie Hochpassfilterung des Beleuchtungssignals;
- Bereitstellung des Ergebnisses der Tiefpassfilterung als Basis zur Ermittlung des Tageslichtbeitrags; sowie
- Bereitstellung des Ergebnisses der Hochpassfilterung als Basis zur Ermittelung des Kunstlichtbeitrags.

## Revendications

1. Détecteur de lumière (104, 300, 400) conçu pour déterminer une contribution de la lumière du jour et une contribution de la lumière artificielle d'un niveau d'éclairement combiné, dans lequel la lumière artificielle comprend une modulation de codage de lumière, laquelle modulation de codage de lumière identifie les luminaires individuels émettant la lumière, le détecteur comprenant :

- un capteur optique (302, 402) conçu pour détecter le niveau d'éclairement au niveau de sa position, et pour produire en sortie un signal d'éclairement correspondant ; et
- un calculateur (304, 404), connecté avec une sortie du capteur optique pour recevoir le signal d'éclairement, et conçu pour calculer une contribution de la lumière du jour et une contribution de la lumière artificielle et produire en sortie des signaux de lumière du jour et de lumière artificielle correspondants ; le calculateur comprenant :
- un filtre électronique (306, 406) conçu pour préparer le signal d'éclairement pour l'estimation de la contribution de la lumière du jour et de la contribution de la lumière artificielle du signal d'éclairement ;
- une partie lumière du jour (312, 410) connectée au filtre électronique ; et
- une partie lumière artificielle (314, 412) connectée au filtre électronique, la partie lumière artificielle (314, 412) comprenant un estimateur de composante CC de lumière artificielle (324, 418),

dans lequel la partie lumière du jour (312, 410) comprend un estimateur de composante CC totale (318, 414) et un soustracteur (328, 420) connecté à l'estimateur de composante CC totale (318, 414) et à l'estimateur de composante CC de lumière artificielle (324, 418), et étant conçu pour déterminer la contribution de la lumière du jour en soustrayant une composante CC de lumière artificielle, estimée par l'estimateur de composante CC de lumière artificielle (324, 418), à partir d'une composante CC totale, estimée par l'estimateur de composante CC totale (318, 414), et
dans lequel l'estimateur de composante CC de lumière artificielle (324, 418) est conçu pour inclure les données de niveau de gradation de l'intensité lumineuse actuel et les données de profondeur de modulation concernant la modulation de codage de la lumière sur une base de son estimation.

2. Détecteur de lumière (400) selon la revendication 1, dans lequel le filtre électronique comprend un filtre de suppression de CC (406).

3. Détecteur de lumière (400) selon la revendication 2, comprenant en outre des moyens de traitement de signaux (408) connectés à une sortie du filtre de suppression de CC (406), lesquels moyens de traitement de signaux sont partagés par la partie lumière du jour (410) et la partie lumière artificielle (412).

4. Détecteur de lumière (300) selon la revendication 1, dans lequel le filtre électronique comprend un filtre passe-bas (308) et un filtre passe-haut (310), la partie lumière du jour (312) étant connectée à une sortie du filtre passe-bas (308), et la partie lumière artificielle (314) étant connectée à une sortie du filtre passe-haut (310).

5. Détecteur de lumière (300, 400) selon l'une quelconque des revendications précédentes, dans lequel la partie lumière artificielle (314, 412) comprend un estimateur d'éclairement de luminaire (322, 416) conçu pour estimer une composante d'éclairement pour chaque luminaire.

6. Détecteur de lumière (300, 400) selon l'une quelconque des revendications précédentes, comprenant en outre un émetteur sans fil (330, 424) conçu pour transmettre le signal de lumière du jour et le signal de lumière artificielle.

7. Détecteur de lumière (104, 300, 400) selon l'une quelconque des revendications précédentes, comprenant en outre un récepteur sans fil conçu pour recevoir les données du niveau actuel de gradation de l'intensité lumineuse du luminaire et la profondeur de modulation.

8. Système d'éclairage (100) comprenant au moins un détecteur (104) selon l'une quelconque des revendications précédentes, et au moins un luminaire à gradation d'intensité lumineuse (102).

9. Système d'éclairage (100) selon la revendication 8, dans lequel chaque luminaire (102) dudit au moins un luminaire comprend un contrôleur (110) conçu pour recevoir le signal de la lumière du jour et le signal de la lumière artificielle en provenance de chaque détecteur (104) dudit au moins un détecteur, et pour contrôler le niveau de gradation de l'intensité lumineuse du luminaire (102) sur la base de ceux-ci.

10. Procédé de détermination d'une contribution de la lumière du jour et d'une contribution de la lumière artificielle d'un niveau d'éclairement combiné, dans lequel la lumière artificielle comprend la modulation de codage de la lumière, laquelle modulation de codage de la lumière identifie les luminaires individuels émettant la lumière, le procédé comprenant :

- la détection d'un niveau d'éclairement et la génération d'un signal d'éclairement correspondant ;
- la réception de données de niveau de gradation d'intensité lumineuse et de données de profondeur de modulation relatives aux luminaires ;
- la détermination, au moyen du signal d'éclairement, d'une contribution de la lumière du jour et d'une contribution de la lumière artificielle des luminaires individuels au niveau d'éclairement, et la génération de signaux de lumière du jour et de lumière artificielle correspondants ; et
- la transmission du signal de lumière du jour et du signal de lumière artificielle codés individuellement pour identifier le détecteur émetteur,

ladite détermination d'une contribution de la lumière du jour et d'une contribution de la lumière artificielle comprenant :

- le filtrage du signal d'éclairement pour le préparer à l'estimation de la contribution de la lumière du jour et de la contribution de la lumière artificielle ; et
- l'estimation d'une composant CC totale et d'une composante CC de lumière artificielle, et la détermination de la contribution de la lumière du jour en tant que différence entre la composante CC totale et la composante CC de lumière artificielle, l'estimation de la composante CC de la lumière artificielle contenant les données de niveau actuel de gradation de l'intensité lumineuse du luminaire et les données de profondeur de modulation concernant la modulation de codage de la lumière dans une base de son estimation.

11. Procédé de contrôle des niveaux de gradation d'intensité lumineuse de luminaires à gradation d'intensité lumineuse d'un système d'éclairage, comprenant une pluralité de luminaires et une pluralité de détecteurs, les détecteurs étant placés au niveau de positions cibles dans un plan d'espace de travail, comprenant :

- l'émission de lumière modulée de codage de lumière à partir des luminaires, laquelle modulation de codage lumineux identifie les luminaires individuels émettant la lumière ;
- la transmission de données de niveau de gradation d'intensité lumineuse codées individuellement et de données de profondeur de modulation concernant la modulation du codage lumineux à partir des luminaires ;

au niveau de chaque détecteur, la détermination d'une contribution de la lumière du jour et une contribution de la lumière artificielle d'un niveau d'éclairement combiné selon la revendication 10 et
au niveau de chaque luminaire :

- la détection de signaux de lumière du jour et de signaux de lumière artificielle en provenance des détecteurs ; et
- la détermination du niveau de gradation de l'intensité lumineuse du luminaire sur la base des signaux de la lumière du jour et de la lumière artificielle.

12. Procédé selon la revendication 10 ou 11, dans lequel ledit filtrage comprend :

- le filtrage passe-bas du signal d'éclairement et le filtrage passe-haut du signal d'éclairement ;
- la fourniture du résultat du filtrage passe-bas en tant que base de la détermination de la contribution de la lumière du jour ; et
- la fourniture du résultat du filtrage passe-haut en tant que base de la détermination de la contribution de la lumière artificielle.

Fig. 2

Fig. 3

EP 2 700 285 B1

Fig. 4

EP 2 700 285 B1

500

Sign. proc. unit

Noise rejec.,
anti-alias filter,
signal amp.

ADC

502

504

*Fig. 5*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ASHISH PANDHARIPANDE ; DAVID CAICEDO.** Daylight integrated illumination control of LED systems based on enhanced presence sensing. *Energy and Buildings,* 2011, 944-950